(19) Europäisches Patentamt
European Patent Office
Office européen des brevets

(11) **EP 2 889 833 A1**

(12) **EUROPEAN PATENT APPLICATION**

(43) Date of publication:
**01.07.2015 Bulletin 2015/27**

(51) Int Cl.:
***G06T 7/00*** (2006.01)

(21) Application number: **13306874.2**

(22) Date of filing: **26.12.2013**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicant: **Thomson Licensing
92130 Issy-les-Moulineaux (FR)**

(72) Inventors:
  • **Urban, Fabrice
    35576 Cesson-Sévigné (FR)**
  • **Wargnier, Pierre
    92700 Colombes (FR)**
  • **Chamaret, Christel
    35576 Cesson-Sévigné (FR)**

(74) Representative: **Huchet, Anne
    Technicolor
    1, rue Jeanne d'Arc
    92443 Issy-les-Moulineaux Cedex (FR)**

(54) **Method and apparatus for image quality assessment**

(57) A method and an apparatus for image quality assessment are described. The method comprises: a color analysis between the reference image which is spatially registered and the test image to generate a color feature mapping between the spatially registered reference image and the test image; a structural analysis between the reference image which is spatially registered and the test image to generate a structural feature mapping between the spatially registered reference image and the test image; and an assessment of the quality of the test image as a function of the combination of the color feature mapping and the structural feature mapping.

Fig. 1

EP 2 889 833 A1

## Description

## TECHNICAL FIELD

The present invention generally relates to the technical field of image processing. In particular, the present invention relates to a method for image quality assessment and a corresponding apparatus.

## BACKGROUND

Image quality assessment (IQA) metrics aim at objectively estimating degradation between a test image which might be degraded and a reference one.

There are several ways of assessing the perceptual visual quality of an image. Methods can be organized into three categories based on their use of a reference. Full-reference (FR) IQA methods compare a target image with a reference image pixel to pixel. Of course, it only works under the assumption that the two images are visually identical. This kind of Perceptual Visual Quality Metric (PVQM) is the most commonly used method. They are used, amongst other applications, to evaluate the visible loss caused by compression algorithms. Reduced-reference (RR) IQA methods differ from the first category by using only partial information from the reference, which is a set of extracted features, and can be used to evaluate the quality of an image after it was transmitted. The last category is blind/no reference (NR) IQA methods which do not use any information from the original image. These metrics usually require additional information through machine learning or statistical models of natural images (NSS). Several NR methods are dedicated to a type of distortion whereas others are for general purpose.

In the above known image quality assessment methods, especially the full reference methods, most metrics are more image fidelity metrics than actual quality ones. In a document of Stefan Winkler, entitled "Visual fidelity and perceived quality: Towards comprehensive metrics", in Proc. SPIE, pages 114 - 125, 2001 (hereinafter referred to as reference 1), it is proposed to add no reference high level features, namely colorfulness and sharpness, to a full reference metric. This is a first step toward a metric that can evaluate not only distortions but also possible image enhancements. However, some image modifications allow local color modification, contrast enhancements of local or global displacement, or removal and insertion of objects. For such processing, existing full-reference image quality metrics cannot be used because the images cannot be compared pixel to pixel.

Moreover, very few works focus on the relevance of the distortion/quality map itself. Furthermore, none of the available image quality databases allows error map validation. No state of the art metric other than full-reference focuses on local distortion or outputs a spatial map.

Therefore, there is a need for an image quality assessment using metric with reference, wherein the image processing for evaluation induces substantial modification. Such metric is named pseudo-full reference image quality metric, which so far is only used in certain specific applications such as painting.

## SUMMARY

According to one aspect of the invention, a method for assessing the quality of a test image with a reference image is provided. The method comprises: a color analysis between the reference image which is spatially registered and the test image to generate a color feature mapping between the spatially registered reference image and the test image; a structural analysis between the reference image which is spatially registered and the test image to generate a structural feature mapping between the spatially registered reference image and the test image; and an assessment of the quality of the test image as a function of the combination of the color feature mapping and the structural feature mapping.

According to one aspect of the invention, an apparatus for assessing the quality of a test image with a reference image. The apparatus comprises a processor configured to execute: a color analysis between the reference image which is spatially registered and the test image to generate a color feature mapping between the spatially registered reference image and the test image; a structural analysis between the reference image which is spatially registered and the test image to generate a structural feature mapping between the spatially registered reference image and the test image; and an assessment of the quality of the test image as a function of the combination of the color feature mapping and the structural feature mapping.

According to one aspect of the invention, a computer program product downloadable from a communication network and/or recorded on a medium readable by computer and/or executable by a processor is provided. The computer program product comprises program code instructions for implementing the method according to one aspect of the invention.

According to one aspect of the invention, a Non-transitory computer-readable medium comprising a computer program product recorded thereon and capable of being run by a processor is provided. Non-transitory computer-readable medium includes program code instructions for implementing the method according to one aspect of the invention.

It is to be understood that more aspects and advantages of the invention will be found in the following detailed description of the present invention.

## BRIEF DESCRIPTION OF THE DRAWINGS

The accompanying drawings are included to provide further understanding of the embodiments of the invention together with the description which serves to explain the principle of the embodiments. The invention is not limited to the embodiments.

In the drawings:

Figure 1 is a block diagrams showing the method for image quality assessment according to an embodiment of the invention;

Figure 2 is a block diagrams showing a global color analysis during the process of the method for image quality assessment according to an embodiment of the invention;

Figure 3 is a block diagrams showing a local structural analysis during the process of the method for image quality assessment according to an embodiment of the invention; and

Figure 4 is a block diagrams showing the structure of an apparatus for image quality assessment according to an embodiment of the invention.

## DETAILED DESCRIPTION

An embodiment of the present invention will now be described in detail in conjunction with the drawings. In the following description, some detailed descriptions of known functions and configurations may be omitted for conciseness.

In image quality assessment, a target image and a reference image for the assessment might be very different, in which case a point by point comparison is irrelevant. When applying changes on the colors or contrasts, the RGB values of the images are dramatically changed even though the semantic content of the scene stays similar or identical. Hence, choices of quality criteria have been oriented towards color-change robust features, such as a contour orientation. The image manipulations are essentially of three natures: spatial modifications, value modifications and semantic modifications. These changes can also be local or global. To be more specific, homomorphic geometrical changes (rotation or rescaling for instance) are global spatial modifications. Techniques used for retouching, such as morphing, are local spatial changes. Color, contrast and luminosity processing on the other hand are value modifications which can be either local or global depending on the purpose. Finally, object insertion or removal falls in the last category: semantic changes. The later is a lot more challenging to consider than the others since in this case, there is no information in the original image to help assess the quality of the processed image.

An embodiment of the present invention provides a method for image quality assessment, using a pseudo-full reference image quality metric to evaluate the quality of an image after several substantial processing, considering the availability of a reference before processing. Target image processing can include resizing, morphing object removal/insertion, contrast enhancement, color enhancement. The embodiment of the invention uses precepts such as structures and color coherence preservation for the image quality assessment.

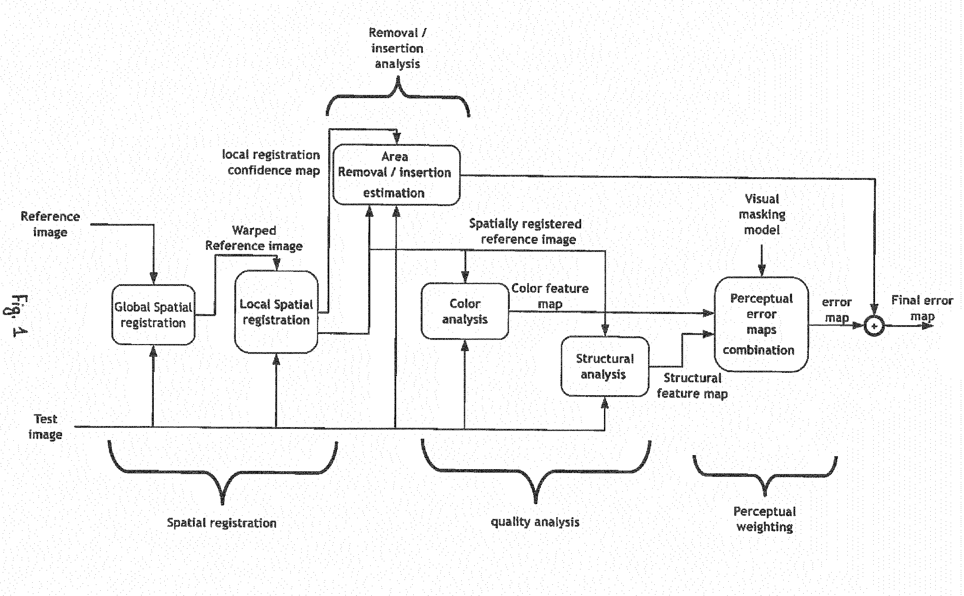

Figure 1 is a block diagrams showing the method for image quality assessment according to an embodiment of the invention.

As shown in Figure 1, generally the pseudo-full reference image quality assessment first performs an image registration, both globally and locally, and then predicts the image quality once the images are aligned. The quality estimation contains two stages: a global color transform analysis and a local structural analysis. A third stage deals with semantic changes to perform quality assessment without reference information in the concerned regions.

In Figure 1, the inputs of the process of the method for image quality assessment according to an embodiment of the invention are two images or two sequences of images. One of the inputs is a reference image. The other one, which is called a test image, is preprocessed either manually, automatically, or semiautomatically. For example, the manual modification of a color of an object on key pictures would be propagated automatically along the sequence. One would like to automatically know whether and where to manually edit failing pictures. The processing between the two images or sequences of images is unknown. It may be any processing that can be found in an image editing application. The output of the process of the method for image quality assessment according to an embodiment of the invention is a perceptual map highlighting visible potential defaults in the processing.

Next, a detailed description will be given to the method for image quality assessment according to an embodiment of the invention.

1. Global spatial registration

As shown in Figure 1, firstly a global spatial registration is performed between the reference image and the test image.

Specifically, the global spatial registration can comprise the following:

(1) The key points are detected in both the reference image and the test image;
(2) The corresponding key point descriptors are extracted;
(3) The key points of each image are matched with the corresponding key points in the other image;
(4) A least mean squared regression to a six degree of freedom affine transform model is computed; and
(5) The reference image is warped according to the computed transform model.

To perform global spatial registration in this embodiment, it is preferred to use robust features. The choice has been naturally oriented to Speeded Up Robust Features (SURF). These local descriptors are based on contour orientations and hence are robust to contrast and color changes as well as scaling and rotation.

The feature matching is performed by the following two steps. First, all of the points of interest are all matched to another. An additional constraint is added to the feature representation: the Euclidean distance of the coordinates of the two points in their respective image is computed and added to the SURF feature distance computation (using Euclidean distances as well). Then the bad matches are eliminated: the matching is performed both ways. In other words, each point of interest in the reference image is matched with the most similar point of interest in the target image and vice-versa. Then, only the matches that are the same in both directions are kept.

The global spatial registration is adapted to allow all global homomorphic transformations with some outliers (caused by local manipulations for instance). To warp the reference image, the destination position is determined by a six parameters affine transform model. The 6-parameter model is estimated from matched key points with a weighted least mean square regression.

## 2. Local spatial registration

After the global spatial registration, a local spatial registration is performed between the warped reference image from the global spatial registration and the test image to precisely match pixels of the reference image and the test image. A motion estimation outputting a dense motion field (or optical flow) can be used, for example, a gradient based algorithm described in B.K.P. Horn and B.G. Schunck, "Determining optical flow." Artificial Intelligence, vol 17, pp 185-203, 1981.

It should be noted that there is no specific order for the spatial registration and the color analysis to be described later. In the embodiment of the invention, the spatial registration is performed first and then the global color analysis. However, the order can be inverted. That is, in order to have more robustness and allow matching of color-modified pixels, the spatial registration can be performed after the global color analysis to be described later. In this case, the spatial registration will be performed between the test image and the warped color-corrected image.

As shown in Figure 1, the confidence of the match from the local spatial registration can be used to output an object removal/insertion map. Pixels for which the matching value is above a threshold (non-matching pixels) are considered as to belong to an area that has been removed or added.

## 3. Global color analysis

Next, a global color analysis is performed between the spatially registered reference image from the spatial registration and the test image to analyze the quality of the color pixel values manipulation itself and output a color feature map.

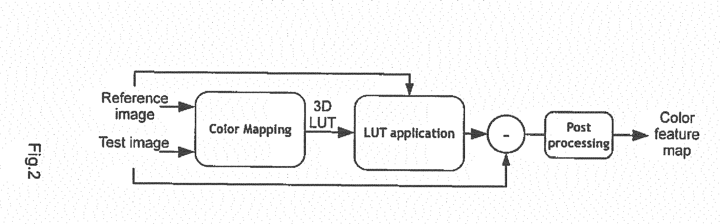

Figure 2 is a block diagrams showing a global color analysis during the process of the method for image quality assessment according to an embodiment of the invention.

As shown in Figure 2, the first step of the global color analysis is to model this transformation using a color mapping tool. Any suitable tools for the color management can be used for this purpose. One example of such tool is described in a document of Hasan Sheikh Faridul, Jurgen Stauder and Alain Trémeau, "Optimization of Sparse Color Correspondences for Color Mapping", Twentieth Color and Imaging Conference: Color Science and Engineering Systems, Technologies, and Applications. 2012; p. 128-134; ISBN / ISSN: 978-0-89208-303-9.

Generally, the global color analysis is to analyze the main color changes between the reference image and the test image. It comprises firstly analyzing the color mapping between a reference image and a test image. Color couples are extracted on corresponding pixel locations. The color correspondences are then represented in a three dimensional lookup table (3D LUT). To perform global color registration, the chosen resolution of the lookup table is 9. As the lookup table has 3 dimensions, it allows a representation of the color transformation with $9^3 = 729$ color pairs. The obtained model of the color mapping is then applied to a copy of the spatially registered reference image which is inputted from the spatial registration to "align" it with the modified image in the color domain. This will give a sparse representation of the RGB color space. To apply the lookup table, an interpolation is needed, which is performed using splines. That is to say, every R', G' and B' component of the new color of each pixel is given by a function of the R, G and B components of the original color R0 = f(R;G;B). This produces a smooth color-mapping. That is, it prevents color transitions when these transitions are not present in the reference image but present in the test image because of the processing. The re-colored reference image and the test image are compared and an absolute difference of the pixel values is computed pixel to pixel between the two images to produce a map of the potential color errors. A morphological opening with a cross pattern of size 5 pixels is applied on this map to filter out the regions with non-significant surface. The regions marked on the obtained map are either artifacts or local color differences. The selected quality criterion is a smoothness constraint: two visually close colors (that is, colors of similar tone/hue) in the original image should be mapped to two other visually close colors in the processed image.

## 4. Local structural analysis

A structural analysis is performed between the spatially registered reference image from the spatial registration and the test image to estimate a structural error, which is an addition or a loss of structures in the test image compared to the reference image.

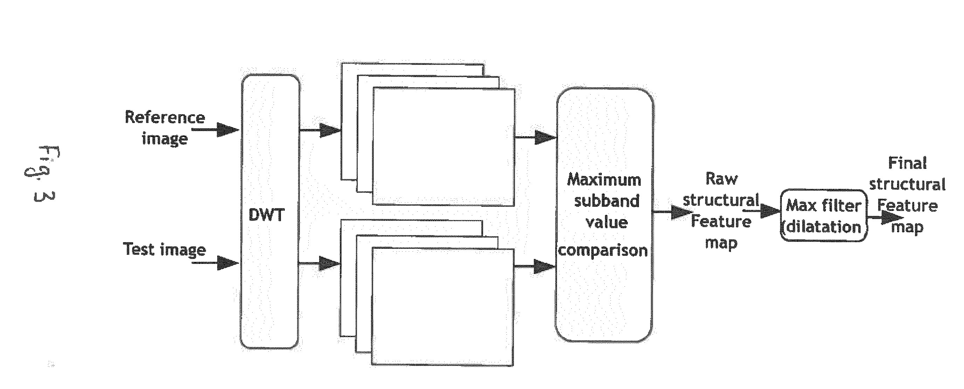

Figure 3 is a block diagrams showing a local structural analysis during the process of the method for image quality assessment according to an embodiment of the invention.

As shown in Figure 3, the discrete wavelet transform (DWT) of a test image and a reference is computed for each channel R, G and B. This transform allows a separation of the high frequencies that contain the contours from the low frequencies in a multi-resolution pyramid. The DWT used in this embodiment has four subbands in each resolution level: three high frequency orientations and the low frequencies. The comparison is then performed using these sub-bands. At a given point in the DWT, if the maximum value is not in the same high-frequency sub-band in both images for at least two color channels, then it is considered as a structural modification (change of contour orientation) which is considered as an error. This maximum orientation comparison is performed for three resolution levels. Then, in order to quantize this error and distinguish errors from noise, a confidence value is used. For a given point, the confidence is given by the difference of the maximum high frequency value and the second value of the three sub-bands at this point. After the errors have been detected in each resolution levels, they are pooled up to the full resolution. Finally, the structural analysis outputs a structural feature map.

5. Error Map Combination

The next step is to combine the color feature map from the global color analysis and the structural feature map from the local structural analysis in a perceptually relevant way to output an error map. A model of activity masking is used to help quantize the visibility of the errors. The activity masking can be computed based on signal entropy, such as in the method described in the document of Ninassi, A., Le Meur, O., Le Callet, P., Barba, D., titled "Which Semi-Local Visual Masking Model For wavelet Based Image Quality Metric?" in: Proceedings of IEEE International Conference on Image Processing IEEE International Conference on Image Processing pp. 1180_1183. The entropy computation is based on gradient computation. For each pixel, absolute values of gradients are computed. Values in each of the 4 directions are accumulated (horizontal, vertical, oblique1, and oblique2). The output value is the minimum accumulated gradient in each direction over the two images (reference and test). This takes into account image complexity and prevents masking in case of edges. To increase neighborhood interaction, this result is averaged on a local window of 5x5 pixels.

Two combination methods are given as examples, given by following equations:

$$E_1(x, y) = \frac{C(x, y) + S(x, y)}{1 + A(x, y)}$$

$$E_2(x, y) = \frac{(1 + C(x, y)) \times (1 + S(x, y))}{1 + A(x, y)}$$

Where Ei(x, y) is the final error map value at position (x, y), C(x, y) is the color analysis map value, S(x, y) is the structural error map value and A is the activity. 1 is added to A at the denominator to avoid undesirable effects of a close to zero value of A(x, y).

6. Evaluating object removal/insertion

For pixels concerned by object removal or insertion, the content cannot be analyzed in the same way. Concerned areas are first detected based on the confidence map of the spatial registration. Then quality can be analyzed taking into account surrounding content of the removed/inserted area described above, for example based on saliency difference such for the detected areas.

The local registration confidence map serves as a mask to compute quality only on areas that could not be matched (areas with potential changes of content). The final error map combines the error map (when registration confidence is greater than a threshold) and the area removal/insertion map (when registration confidence is smaller than a threshold).

As described above, an embodiment of the invention provides a method for image quality assessment. With this method, the quality of an image can be assessed regardless of what process was made to the image. The method uses pseudo-full reference metric which allows content modification such as color modification. In addition, the method can evaluate the quality of an image applied with a global color processing.

An embodiment of the invention provides a corresponding apparatus for video quality assessment.

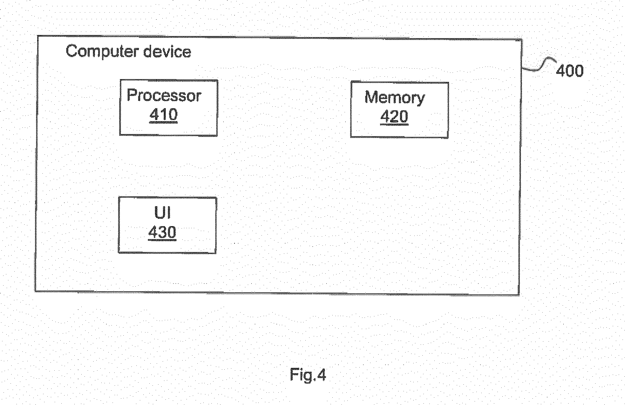

Figure 4 is block diagram showing a computer device 400 for image quality assessment according to an embodiment of the invention. The computer device 400 can be any kind of suitable computer or device capable of performing calculations, such as a standard Personal Computer (PC). The device 400 comprises at least one processor 410, RAM memory 420 and a user interface 430 for interacting with a user. The skilled person will appreciate that the illustrated computer is very simplified for reasons of clarity and that a real computer in addition would comprise features such as network connections and persistent storage devices.

With the user interface 430, a user can input/select a test image and a reference image for the quality assessment of the test image. The result of the quality assessment can be outputted to the user by the user interface 430.

The processor 410 comprises a first unit for a color analysis between the reference image which is spatially registered and the test image to generate a color feature mapping between the spatially registered reference image and the test image.

The processor 410 further comprises a second unit for a structural analysis between the reference image which is spatially registered and the test image to generate a structural feature mapping between the spatially registered reference image and the test image.

The processor 410 further comprises a third unit for an assessment of the quality of the test image as a function of the combination of the color feature mapping and the structural feature mapping.

An embodiment of the invention provides a computer program product downloadable from a communication network and/or recorded on a medium readable by computer and/or executable by a processor, comprising program code instructions for implementing the the method described above.

An embodiment of the invention provides a non-transitory computer-readable medium comprising a computer program product recorded thereon and capable of being run by a processor, including program code instructions for implementing the method described above.

The invention can be implemented on a server which can have an in-loop quality estimation of an automated processing and the quality report can be used to tune processing parameters.

The invention can also be used in a video editing system. When a manual processing on key frames would be propagated along the video, the user can be warned of images where the propagation did not go well and manually retouch.

It is to be understood that the present invention may be implemented in various forms of hardware, software, firmware, special purpose processors, or a combination thereof. Moreover, the software is preferably implemented as an application program tangibly embodied on a program storage device. The application program may be uploaded to, and executed by, a machine comprising any suitable architecture. Preferably, the machine is implemented on a computer platform having hardware such as one or more central processing units (CPU), a random access memory (RAM), and input/output (I/O) interface(s). The computer platform also includes an operating system and microinstruction code. The various processes and functions described herein may either be part of the microinstruction code or part of the application program (or a combination thereof), which is executed via the operating system. In addition, various other peripheral devices may be connected to the computer platform such as an additional data storage device and a printing device.

It is to be further understood that, because some of the constituent system components and method depicted in the accompanying figures are preferably implemented in software, the actual connections between the system components (or the process steps) may differ depending upon the manner in which the present invention is programmed. Given the teachings herein, one of ordinary skill in the related art will be able to contemplate these and similar implementations or configurations of the present invention.

**Claims**

1. A method for assessing the quality of a test image with a reference image, comprising:

   a color analysis between the reference image which is spatially registered and the test image to generate a color feature mapping between the spatially registered reference image and the test image;
   a structural analysis between the reference image which is spatially registered and the test image to generate a structural feature mapping between the spatially registered reference image and the test image; and
   an assessment of the quality of the test image as a function of the combination of the color feature mapping and the structural feature mapping.

2. Method according to claim 1, wherein the color analysis between the reference image which is spatially registered and the test image comprises:

   a global spatial registration between the reference image and the test image to generate a warped reference image;
   a local spatial registration between the warped reference image and the test image to generate a spatially registered reference image; and
   a global color analysis between the spatially registered reference image and the test image to generate a color feature mapping between the spatially registered reference image and the test image.

3. Method according to claim 2, wherein the global spatial registration between the reference image and the test image comprises:

   detecting key points in both the reference image and the test image;
   extracting descriptors of the detected key points;
   matching key points of the test image with the corresponding key points in the reference image;
   computing a least mean squared regression to a six degree of freedom affine transform model; and

warping the reference image according to the computed transform model.

**4.** Method according to claim 2, wherein the global color analysis between the spatially registered reference image and the test image comprises:

obtaining a color mapping between the reference image and the test image;
re-coloring the spatially registered reference image with the obtained color mapping; and
generating a color feature mapping between the spatially registered reference image and the test image by computing an absolute difference of the pixel values pixel to pixel between the re-colored reference image and the test image.

**5.** Method according to claim 4, wherein the color mapping is represented by a three dimensional lookup table.

**6.** Method according to claim 2, the structural analysis between the spatially registered reference image and the test image comprises:

computing a discrete wavelet transform (DWT) of the test image and the spatially registered reference image for each channel R, G and B; and
comparing the test image and the spatially registered reference image using the sub-bands of the discrete wavelet transform (DWT) in each resolution level to generate a structural feature mapping between the spatially registered reference image and the test image.

**7.** Method according to claim 1, wherein the function of the combination is by the equation of

$$E_1(x, y) = \frac{C(x, y) + S(x, y)}{1 + A(x, y)}$$

Wherein E1 (x, y) is the final error map value at position (x, y), C(x, y) is the color feature mapping value, S(x, y) is the structural feature mapping value, and A is the activity.

**8.** Method according to claim 1, wherein the function of the combination is by the equation of

$$E_2(x, y) = \frac{(1 + C(x, y)) \times (1 + S(x, y))}{1 + A(x, y)}$$

Wherein E2(x, y) is the final error map value at position (x, y), C(x, y) is the color feature mapping value, S(x, y) is the structural feature mapping value, and A is the activity.

**9.** Method according to claim 1, wherein the color analysis between the reference image which is spatially registered and the test image comprises:

a global color correction between the reference image and the test image to generate a warped color-corrected image; and
a spatial registration between the warped color-corrected image and the test image to generate a color feature mapping between the spatially registered reference image and the test image.

**10.** An apparatus for assessing the quality of a test image with a reference image, comprising a processor configured to execute :

a color analysis between the reference image which is spatially registered and the test image to generate a color feature mapping between the spatially registered reference image and the test image;
a structural analysis between the reference image which is spatially registered and the test image to generate a structural feature mapping between the spatially registered reference image and the test image; and
an assessment of the quality of the test image as a function of the combination of the color feature mapping and the structural feature mapping.

**11.** Computer program product downloadable from a communication network and/or recorded on a medium readable by computer and/or executable by a processor, comprising program code instructions for implementing the method according to at least one of claims 1 to 9.

**12.** Non-transitory computer-readable medium comprising a computer program product recorded thereon and capable of being run by a processor, including program code instructions for implementing the method according to at least one of claims 1 to 9.

Fig. 1

Fig.2

Fig. 3

Computer device

Processor
410

Memory
420

UI
430

400

Fig.4

Europäisches
Patentamt

European
Patent Office

Office européen
des brevets

## EUROPEAN SEARCH REPORT

Application Number

EP 13 30 6874

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | YUNYU SHI ET AL: "Structure and Hue Similarity for Color Image Quality Assessment", ELECTRONIC COMPUTER TECHNOLOGY, 2009 INTERNATIONAL CONFERENCE ON, IEEE, PISCATAWAY, NJ, USA, 20 February 2009 (2009-02-20), pages 329-333, XP031434038, ISBN: 978-0-7695-3559-3 * abstract; figure 1 * * section 2 Image quality assessment based on SSIM * * subsection 3.1 Color component determination * * subsection 3.2 Relative importance determination * | 1-12 | INV. G06T7/00 |
| X | US 2011/216979 A1 (BARKOL OMER [IL] ET AL) 8 September 2011 (2011-09-08) * abstract; figure 1 * | 1-12 | |
| A | BOVIK A C ET AL: "Image Quality Assessment: From Error Visibility to Structural Similarity", IEEE TRANSACTIONS ON IMAGE PROCESSING, IEEE SERVICE CENTER, PISCATAWAY, NJ, US, vol. 13, no. 4, 2004, pages 600-612, XP011110418, ISSN: 1057-7149, DOI: 10.1109/TIP.2003.819861 * the whole document * | 1-12 | TECHNICAL FIELDS SEARCHED (IPC)<br><br>G06T<br>G06K<br>H04N |

-/--

The present search report has been drawn up for all claims

| Place of search | Date of completion of the search | Examiner |
|---|---|---|
| Munich | 26 May 2014 | Blaszczyk, Marek |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt

European
Patent Office

Office européen
des brevets

# EUROPEAN SEARCH REPORT

Application Number

EP 13 30 6874

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | DAMON M. CHANDLER: "Seven Challenges in Image Quality Assessment: Past, Present, and Future Research", ISRN SIGNAL PROCESSING, vol. 102, no. 3, 1 January 2013 (2013-01-01), pages 207-53, XP055119901, DOI: 10.1007/s11554-010-0170-9 * the whole document * | 1-12 | |

TECHNICAL FIELDS
SEARCHED (IPC)

The present search report has been drawn up for all claims

| Place of search | Date of completion of the search | Examiner |
|---|---|---|
| Munich | 26 May 2014 | Blaszczyk, Marek |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 13 30 6874

This annex lists the patent family members relating to the patent documents cited in the above-mentioned European search report.
The members are as contained in the European Patent Office EDP file on
The European Patent Office is in no way liable for these particulars which are merely given for the purpose of information.

26-05-2014

| Patent document cited in search report | Publication date | Patent family member(s) | Publication date |
|---|---|---|---|
| US 2011216979 A1 | 08-09-2011 | NONE | |

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **STEFAN WINKLER.** Visual fidelity and perceived quality: Towards comprehensive metrics. *Proc. SPIE,* 2001, 114-125
- **B.K.P. HORN ; B.G. SCHUNCK.** Determining optical flow. *Artificial Intelligence,* 1981, vol. 17, 185-203
- **HASAN SHEIKH FARIDUL ; JURGEN STAUDER ; ALAIN TRÉMEAU.** Optimization of Sparse Color Correspondences for Color Mapping. *Twentieth Color and Imaging Conference: Color Science and Engineering Systems, Technologies, and Applications,* 2012, ISSN 978-0-89208-303-9, 128-134
- **NINASSI, A. ; LE MEUR, O. ; LE CALLET, P. ; BARBA, D.** Which Semi-Local Visual Masking Model For wavelet Based Image Quality Metric?. *Proceedings of IEEE International Conference on Image Processing IEEE International Conference on Image Processing,* 1180-1183